# EUROPÄISCHE PATENTANMELDUNG

(11) **EP 2 782 142 A1**
(43) Veröffentlichungstag der Anmeldung: **24.09.2014**
(21) Anmeldenummer: 14160206.0
(22) Anmeldetag: 17.03.2014
(51) Int. Cl.: H01L 31/042

(54) **Gartenmöbel mit photovoltaischem Element**

(30) Priorität: 18.03.2013 CH 6212013
(71) Anmelder: Weingartner, Markus, 8172 Niederglatt (CH)
(72) Erfinder: Weingartner, Markus, 8172 Niederglatt (CH)
(74) Vertreter: Körner, Thomas Ottmar

(57) **Zusammenfassung**

Gartenmöbel und Mobiliar für den Aussenbereich wie Tische , Bänke, Liegestühle, Dekorartikel und Trennwände, Würfel, Türme, die solare Strahlung in Strom umwandeln und die elektrische Energie in das Wechselstrom Netz einspeisen und ohne Batterien auskommen.

Es werden Solarmodule in allen Varianten angeboten um Strom zu erzeugen. Diese werden normalerweise nur für die Stromerzeugung eingesetzt. Es gibt Solarmodule die zusätzlich noch einen zweiten Nutzen erfüllen z.B. als Ersatz für Ziegel und damit Regenschutz etc. aber nicht als Gartenmöbel oder Körper. Durch diese Erfindung kann die Photovoltaik nicht nur auf Dächern, Fassaden, Balkonen und im Freiland sondern auch in Privat Gärten, im öffentlichen Raum, etc. genutzt werden. Dadurch dass diese Photovoltaik Gartenmöbel einen doppelten Nutzen haben sind Sie kostengünstig und brauchen keinen zusätzlichen Platz. Bis jetzt gab es schon Solartische, die haben aber nur eine Batterie aufgeladen.

Damit ist die Nutzung der Photovoltaik vor allem in urbanen Gebieten höher als vorher.

## Beschreibung

Die vorliegende Erfindung bezieht sich auf das Gebiet der elektrischen Energieerzeugung und -übertragung, insbesondere in Zusammenhang mit der Stromerzeugung durch Photovoltaik. Sie betrifft Mobiliar für den Aussenbereich, insbesondere Gartenmöbel, mit integrierten Solarmodulen zur Elektrizitäts-Netzeinspeisung ohne Batterie, sowie ein System zur photovoltaischen Energieerzeugung nach dem Oberbegriff der unabhängigen Patentansprüche.

### Technologischer Hintergrund

Es werden Solarmodule in verschiedenen Varianten angeboten, um aus Sonnenstrahlung elektrischen Strom zu erzeugen. Diese werden normalerweise nur für die Stromerzeugung gebaut und eingesetzt. Es gibt Solarmodule die zusätzlich noch einen zweiten Nutzen erfüllen z.B. als Ersatz für Ziegel und damit als Regenschutz, als Absturzsicherung bei Geländern, als Blendschutz, Schallschutz, als Fassadenverkleidung etc. Photovoltaik, die einen doppelten Nutzen als Stromerzeuger und als Ersatz für ein Konstruktionselement hat, wird auch BIPV genannt ("Building integrated photovoltaics", im Bauwerk integrierte Photovoltaik).

Es ist naheliegend, dass Photovoltaik auf bestehenden Dächern eingesetzt wird, aber wenn diese schon genutzt werden oder die entsprechende Person kein Dach besitzt oder Nutzen darf, wird es schwieriger eine sinnvolle Art der Energieerzeugung mittels Photovoltaik zu finden. Zwar ist auch dies möglich, es können Solarmodule auf einem Befestigungssystem in den Garten gestellt oder an den Balkon gehängt werden, aber dies ist optisch nicht sehr ansprechend, es braucht zusätzlichen Platz und es kostet zusätzlich.

Solarmodule werden in Europa normalerweise mit einem Winkel von ca. 30° nach Süden ausgerichtet, weil dann der höchste Ertrag erzielt wird. Um die Boden oder Dachfläche optimal zu nutzen werden inzwischen die Solarmodule auch mit einem Winkel von ca. 15° nach Osten und Westen ausgerichtet, da sie sich so im Gegensatz zur Südausrichtung nicht gegenseitig verschatten aber trotzdem vom Regen gereinigt werden. Dies ist jedoch nur begrenzt möglich, wenn in einem Garten oder auf einem Dach nur sehr wenig Platz zur Verfügung steht, aber trotzdem ein maximaler Ertrag pro Fläche erzielt werden soll, ist auch diese Technologie wenig zielführend.

Es werden in diversen Patenten Sonnenstühle, Tische etc. beschrieben, die Solarmodule eingebaut haben (z.B. US2011/0193372 A1, JP2008017631, CN201775244U). Alle diese Patentdokumente beschreiben aber Systeme, die eine Batterie speisen und zum Laden von Telefonen, Laptops und ähnlichem verwendet werden. Teilweise ist auch ein Wechselrichter integriert, der eine AC Spannung erzeugt, aber nicht in ein Verteilungsnetz wie z.B. ins Landesnetz einspeisen kann. Das Problem bei den bestehenden Lösungen ist, dass die erzeugte Energie, die benötigte Energie und der Ort der gespeicherten Energie in einem Missverhältnis stehen. Dies scheint der Grund zu sein, dass sich keines dieser Systeme am Markt durchsetzen konnte. Das heisst, wenn es länger sonnig ist, ist der Gebrauch von Laptops nicht länger oder im Winter wenn es kaum Strahlung hat wird trotzdem telefoniert. Umgekehrt ist es sehr mühsam, im Winter z.B. bei Niederschlag mit dem Laptop nach draussen zu gehen und den Laptop mehrstündig z.B. an einem Solartisch zu laden. Man könnte ein Kabel in ein Haus ziehen, das den Tisch mit dem Haus verbindet aber auch dies macht im Kontext wenig Sinn, da es dann keinen Tisch mehr braucht und man besser ein Solarmodul auf das Dach montiert.

Es ist deswegen Aufgabe der Erfindung, Vorrichtungen anzugeben, welche die oben genannten Nachteile nicht aufweist.

### Beschreibung der Erfindung

Diese und weitere Aufgaben werden durch ein Mobiliar für den Aussenbereich, insbesondere Mobiliar im Aussenbereich, insbesondere Gartenmöbel, mit integrierten Solarmodulen zur Elektrizitäts-Netzeinspeisung ohne Batterie, sowie ein System zur photovoltaischen Energieerzeugung und -übertragung mit den Merkmalen der unabhängigen Patentansprüche gelöst. Weitere vorteilhafte Ausgestaltungen der Erfindung sind in den abhängigen Patentansprüchen angegeben.

Ein erfindungsgemässes Mobiliar für den Aussenbereich, insbesondere ein Gartenmöbel, ist dadurch gekennzeichnet, dass es solare Strahlung in Strom umwandelt und die erzeugte elektrische Energie in ein Wechselstromnetz, insbesondere über ein elektrisches Versorgungsnetz in ein elektrisches Verteilungsnetz, einspeist. Das Wechselstromnetz wird dabei im folgenden auch kurz als "Netz" bezeichnet.

Dazu umfasst das erfindungsgemässe Mobiliar für den Aussenbereich, insbesondere das Gartenmöbel, einerseits Mittel zur Umwandlung von solarer Strahlung in Strom, insbesondere ein photovoltaisches Element; andererseits Mittel zur Einspeisung elektrischer Energie in ein elektrisches Versorgungsnetz, insbesondere einen Wechselrichter, welcher dazu ausgelegt ist, in das elektrische Versorgungsnetz einspeisen zu können, und zu diesem Zwecke insbesondere dazu ausgelegt ist, auf das elektrische Versorgungsnetz aufsynchronisieren zu können.

Unter einem elektrischen Versorgungsnetz, das im folgenden auch kurz "Wechselstromnetz" bezeichnet wird, wird im Rahmen des vorliegenden Dokuments ein Niederspannungsnetz, insbesondere in Niederspannungs-Wechselstromnetz mit einer Netzspannung im Niederspannungsbereich, d.h. zwischen 50 V und 1000 V verstanden. Für einphasige Niederspannungs-Wechselstromnetze liegt die Netzspannung dabei vorzugsweise im Bereich zwischen 100V und 240V, für dreiphasige Niederspannungs-Wechselstromnetze im Bereich zwischen 100V und 450V. Derartige Netze dienen der Versorgung von Endabnehmern elektrischer Energie zum Betrieb von Niederspannungsgeräten, d.h. Geräten, die zum Betrieb mit entsprechenden, ein- oder dreiphasigen, Netzspannungen im Niederspannungsbereich ausgelegt sind.

Eine räumliche Ausdehnung des elektrischen Versorgungsnetzes ist dabei auf einen geographischen Bereich von einigen 100m bis zu einigen wenigen Kilometern, vorzugsweise maximal 10km, beschränkt. Das elektrischen Versorgungsnetz umfasst innerhalb seiner räumlichen Ausdehnung Zuleitungen zu Gebäuden und Räumlichkeiten; sowie eine Vielzahl von in diesen Gebäuden und Räumlichkeiten vorgesehenen Versorgungsanschlüssen. Die Versorgungsanschlüssen sind insbesondere in Form von Steckdosen ausgebildet und für einen, insbesondere lösbaren und/oder temporären, elektrischen Anschluss von Niederspannungsgeräten durch den Endverbraucher mittels entsprechender Stecker ausgelegt.

Das elektrische Versorgungsnetz ist mit einem elektrischen Verteilungsnetz gekoppelt, und kann von diesem sowohl elektrische Energie beziehen, als auch elektrische Energie an dieses abgeben. Unter einem elektrischen Verteilungsnetz wird im Rahmen des vorliegenden Dokuments in elektrisches Netz mit einer Netzspannung im Hochspannungsbereich, vorzugsweise ein Mittelspannungs-Wechselstromnetz mit einer Netzspannung im Mittelspannungsbereich, insbesondere zwischen 1,0kV und 50kV, vorzugsweise zwischen 10kV und 36kV verstanden. Zur Kopplung zwischen elektrischem Versorgungsnetz und elektrischem Verteilungsnetz dient im Allgemeinen eine Transformatorenstation, welche insbesondere einen Transformator zur Umwandlung zwischen Mittelspannung und Niederspannung umfasst.

Das elektrische Verteilungsnetz dient im Regelfall einer regionalen Verteilung elektrischer Energie, vorzugsweise in einem geographischen Bereich mit einer Ausdehnung von einigen Kilometern bis zu etwa 100km, und ist zur Versorgung mit und zur Speicherung von elektrischer Energie mit Kraftwerken, insbesondere thermischen Kraftwerken bzw. Einrichtungen zur Speicherung elektrischer Energie, insbesondere Pumpspeicherwerken, verbunden. Die Verbindung erfolgt dabei im Allgemeinen über ein elektrisches Transportnetz mit einer Netzspannung im Hoch- oder Höchstspannungsbereich, vorzugsweise über 100kV, kann jedoch auch direkt erfolgen.

Das erfindungsgemässe Mobiliar für den Aussenbereich, insbesondere das Gartenmöbel, speist direkt, insbesondere ohne Batterie, ins Netz ein. D.h. jegliche Energie wird vom Netz, insbesondere vom elektrischen Verteilungsnetz, das als unendlicher Speicher dient, jederzeit aufgenommen und die Energie kann auch jederzeit fast an jedem Ort der Erde wieder bezogen werden, was der Attraktivität von entsprechendem Mobiliar für den Aussenbereich sehr zuträglich ist.

Eine lokale Speicherung elektrischer Energie ist dabei lediglich zum Zwecke einer Wechselrichtung erforderlich und erfolgt insbesondere in einem Kondensator, welcher insbesondere als Teil der Mittel zur Einspeisung in das elektrische Versorgungsnetz, vorzugsweise als Teil des Wechselrichters, vorgesehen ist. Die lokale Speicherung elektrischer Energie erfolgt dabei lediglich über Zeiträume *T*ₛ, welche kürzer sind als ein 10⁵-faches einer Periodendauer T = 1/*f* der Netzspannung des elektrischen Versorgungsnetzes, i.e. *T*ₛ < 10000*T*, vorzugsweise *T*ₛ < 100*T*, wobei eine Frequenz *f* der Netzspannung insbesondere im Bereich zwischen 10Hz und 100Hz, vorzugsweise zwischen 45Hz und 65Hz liegt. Eine lokale Langzeitspeicherung elektrischer Energie, insbesondere im erfindungsgemässen Mobiliar für den Aussenbereich, oder auch im elektrischen Versorgungsnetz ist somit nicht erforderlich, dass Mobiliar kommt also ohne eine derartige Langzeitspeicherung aus. Somit müssen weder im noch am erfindungsgemässen Mobiliar elektrische Energiespeicher zur Langzeitspeicherung einer aus solarer Strahlung, insbesondere vom photovoltaischen Element erzeugten elektrischen Energie vorgesehen werden, noch müssen solche zwischen das erfindungsgemässe Mobiliar für den Aussenbereich und das elektrische Versorgungsnetz zwischengeschaltet werden. Das erfindungsgemässe Mobiliar für den Aussenbereich kommt somit insbesondere ohne Batterien, Akkumulatoren oder andere elektrochemische Energiespeicher oder Energiewandler aus. Dass keine lokale Langzeitspeicherung erforderlich ist, ist dabei im Rahmen des vorliegenden Dokuments dahingehend zu verstehen, dass für einen Betrieb des erfindungsgemässen Mobiliars keine Speicherung elektrischer Energie über einen Zeitraum *T*_{Sl} erforderlich ist, der lang ist im Vergleich zur nominalen Periodendauer T = 1/*f* der Netzspannung des elektrischen Versorgungsnetzes, d.h dass keinerlei Speicherung über einen Zeitraum *T*_{Sl} mit *T*_{Sl} > 10000T, vorzugsweise keinerlei Speicherung über einen Zeitraum *T*_{Sl} mit *T*_{Sl} > 100T erforderlich ist.

Zwar können am erfindungsgemässen Mobiliar Batterien, Akkumulatoren oder andere elektrochemische Energiespeicher oder Energiewandler vorgesehen sein, diese werden zum Betrieb des Mobiliars, insbesondere zur Einspeisung in das Verteilungsnetz, jedoch nicht benötigt und sind vorzugsweise elektrisch und/oder mechanisch vom Mobiliar trennbar ausgeführt.

Eine elektrische Verbindung mit dem Verteilungsnetz erfolgt dabei vorzugsweise über das Versorgungsnetz, insbesondere über einen, vorzugsweise lösbaren und/oder temporären, elektrischen Anschluss an das Versorgungsnetz, insbesondere über einen Versorgungsanschluss des Versorgungsnetzes, d.h. z.B. mittels eines am Mobiliar vorgesehenen Steckers, der in eine Steckdose des Versorgungsnetzes eingesteckt werden kann. Sie kann aber vorteilhaft auch über eine andere, insbesondere permanente, Art von Anschluss an das Versorgungsnetz, beispielsweise an einem Stromverteilerkasten etc. erfolgen.

Durch diese Erfindung kann die Photovoltaik nicht nur auf Dächern, Fassaden, Balkonen und im Freiland sondern auch mit Gartenmöbeln wie Tischen, Sofas, Sitzbänken, Liegestühlen, Abtrennwänden, Blumentöpfen oder Blumentrögen etc. genutzt werden. Damit ist die Nutzung der Photovoltaik vor allem in urbanen Gebieten höher als vorher.

Zusätzlich werden folgende wichtige Aspekte, die einer kommerziellen Nutzung entgegenkommen, abgedeckt:
- Die Photovoltaik Gartenmöbel sind durch den Regen selbstreinigend
- Die energieerzeugenden Gartenmöbel sind kratzfest
- Einzelne Solarmodule können bei Beschädigung innerhalb kurzer Zeit ausgetauscht werden
- Beschattung beeinflusst die Stromproduktion der nicht beschatteten Photovoltaik Module nicht
- Beim Bruch eines PV Moduls besteht keine Verletzungsgefahr
- Die Solarmodule können in allen möglichen Varianten wie kristallin, dünnschicht, aus Glas, Kunststoff etc. ausgeführt sein
- Die elektrischen Verbindungen erfolgen mit flexiblen Kabeln und wasserdichten Steckern
- Die Solarmodule können flexibel sein, d.h. die Möbel können auch runde Formen haben
- Die Solarmodule können beidseitig (Bifacial) Energie erzeugen, was z.B. bei Abtrennwänden interessant sein kann
- Die Solarmodule können teilweise transparent sein oder ganzflächig halbtransparent sein

Mit Solarstrom- bzw. Photovoltaik-Mobiliar im Aussenbereich, insbesondere Solarstrom- bzw. Photovoltaik-Gartenmöbeln, werden zwei Ansprüche auf einmal befriedigt, z.B. durch das Anschaffen eines Solar Gartentisches kann man als Nebenprodukt noch ca. 25% seines Strombedarfs erzeugen. Des weiteren sind Gartenmöbel nicht baubewilligungspflichtig und brauchen keinen Elektriker für die Installation, da man sie direkt in die Steckdose einstecken kann, was es noch interessanter macht.

Die Solar Gartenmöbel sind ein ansprechendes Produkt, das keinen zusätzlichen Platz braucht und sehr kostengünstig ist, da die meisten Teile einen zweiten Nutzen haben und damit auch sonst benötigt würden.

Ein erfindungsgemässes elektrisches Energieerzeugungs- und -übertragungssystem, umfasst ein Versorgungsnetz, insbesondere ein Niederspannungsnetz, mit einer Vielzahl von Versorgungsanschlüssen, insbesondere Steckdosen, zur Versorgung von Geräten mit elektrischer Energie; ein Verteilungsnetz, insbesondere ein Mittelspannungsnetz, mit welchem das Versorgungsnetz zum Austausch elektrischer Energie gekoppelt ist; ein photovoltaisches Element, insbesondere ein Solarmodul, zur Erzeugung elektrischer Energie; wobei das photovoltaische Element in ein Mobiliar für den Aussenbereich integriert ist;das Mobiliar für den Aussenbereich einen Wechselrichter umfasst; und das photovoltaische Element zur Einspeisung elektrischer Energie in das Verteilungsnetz mit dem Versorgungsnetz verbunden ist, vorzugsweise über einen ersten Versorgungsanschluss.

Diese und weitere Aufgaben, Vorteile und Merkmale der Erfindung werden aus der nachfolgenden, detaillierten Beschreibung eines bevorzugten Ausführungsbeispiels der Erfindung in Verbindung mit den Zeichnungen offensichtlich.

### Kurze Beschreibung der Figuren

Es zeigen schematisch
Fig. 1: Eine Übersicht der Anwendung bei Tischen und Liegestühlen als Beispiele bevorzugter Ausführungen der Erfindung;
Fig. 2: Eine Detailansicht eines Solartisches als Beispiel einer ersten bevorzugten Ausführung der Erfindung;
Fig. 3: Eine Detailansicht eines Solar-Liegestuhls als Beispiel einer zweiten bevorzugten Ausführung der Erfindung;
Fig. 4: Eine Detailansicht eines Solar-Blumentrogs als Beispiel einer dritten bevorzugten Ausführung der Erfindung;
Fig. 5: Eine Detailansicht eines Solar-Würfels als Beispiel einer vierten bevorzugten Ausführung der Erfindung;
Fig. 6: Eine Detailansicht eines Solar-Turms als Beispiel einer fünften bevorzugten Ausführung der Erfindung;

Grundsätzlich bezeichnen gleiche Bezugszeichen gleiche Teile.

### Wege zur Ausführung der Erfindung

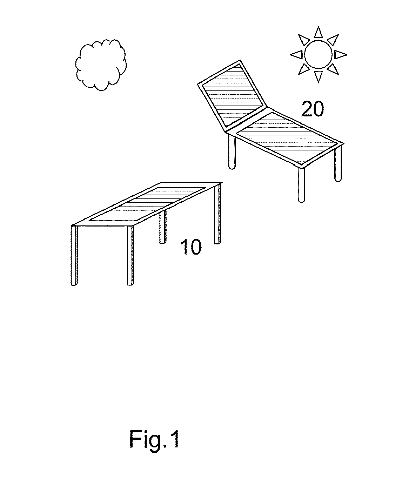

Fig. 1 zeigt, als Beispiele bevorzugter Ausführungen der Erfindung, schematisch einen Solartisch 10 sowie einen Solar-Liegestuhl 20.

Im Folgenden werden verschiedene Ausführungsvarianten beschrieben, einmal als Photovoltaik Tisch bzw. Solartisch 10, einmal als Photovoltaik Liegestuhl bzw. Solar-Liegestuhl 20, einmal als Photovoltaik Blumentrog bzw. Solar Blumentrog, einmal als Solar-Würfel, und einmal als Solar-Turm.

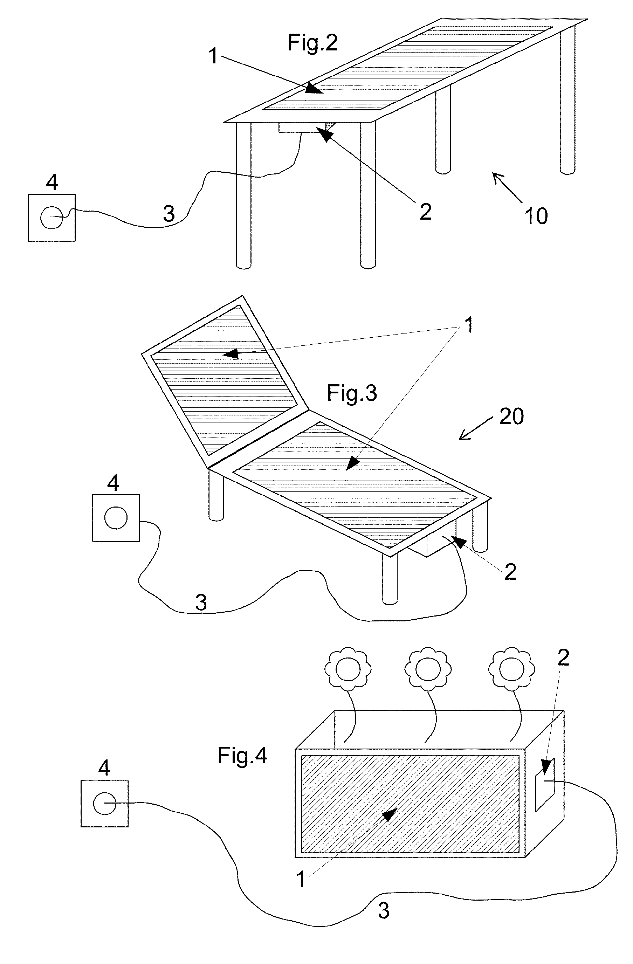

Fig. 2 zeigt eine detaillierte Schemaansicht eines Solartisches 10 als Beispiel einer ersten bevorzugten Ausführung der Erfindung.

Der Solartisch 10 besteht aus einer Tischplatte mit integrierten Solarmodul 1, den Tischfüssen, dem Netzwechselrichter 2 und dem Kabel 3 das den Tisch mit dem Wechselstromnetz via Steckdose 4 verbindet, welche einen Versorgungsanschluss eines (in Fig. 2 nicht gezeigten) Versorgungsnetzwerks darstellt. In einer in Fig. 1 nicht gezeigten Variante kann der Tisch vorteilhaft auch direkt ohne Steckdose ans Netz, insbesondere das Versorgungsnetzwerk, angeschlossen werden.

Die oberste Schicht des Solarmoduls 1 besteht aus einer ersten, dünnen Schicht 0.2 mm Spezialglas, das eine entsprechende Kratzfestigkeit sicherstellt. Diese erste Schicht ist mit einer unteren, zweiten Schicht Glas durch Lamination fest verbunden.

Die zweite Schicht Glas besteht aus Einscheiben-Sicherheitsglas (ESG), welches vorzugsweise zwischen 4mm und 20mm, höchst vorzugsweise zumindest annähernd 8mm dick ist und so eine mechanische Festigkeit gewährt; und bei einem Bruch wie bei einer Autoscheibe in kleine Stücke zerfällt und eine Verletzungsgefahr bei einem Bruch auf ein Minimum beschränkt.

Jedes Modul enthält einen Modulwechselrichter 2 um sicherzustellen, dass bei einer Verschattung eines oder mehrerer Module die nicht beschatteten Module trotzdem die volle Leistung ans Netz abgeben.

Fig. 3 zeigt eine detaillierte Schemaansicht eines Solar-Liegestuhls 20 als Beispiel einer zweiten bevorzugten Ausführung der Erfindung.

Der Solar-Liegestuhl 20 besteht aus einer Liegefläche mit integrierten Solarmodulen 1, den Liegestuhlfüssen, dem Netzwechselrichter 2 und dem Kabel 3, das den Liegestuhl mit dem Wechselstromnetz via Steckdose 4 verbindet. Jedes Modul enthält eine Modulwechselrichter 2 um sicherzustellen, dass bei einer Verschattung eines oder mehrerer Module die nicht beschatteten Module trotzdem die volle Leistung ans Netz abgeben.

Fig. 4 zeigt eine detaillierte Schemaansicht eines Solar-Blumentrogs als Beispiel einer dritten bevorzugten Ausführung der Erfindung.

Der Photovoltaik Blumentrog besteht aus einer Wanne mit integriertem Solarmodul 1, dem Netzwechselrichter 2 und dem Kabel 3 das den Blumentrog mit dem Wechselstromnetz via Steckdose 4 verbindet.

Die vorstehend beschriebenen Ausführungen sind besonders vorteilhaft, weil sie einen doppelten Nutzen aufweisen, indem sie einerseits als Möbel verwendbar sind, andererseits auch zur Energieerzeugung dienen, wobei beide Funktionen auch gleichzeitig in Anspruch genommen werden können.

In weiteren bevorzugten Ausgestaltungen des erfindungsgemässen Mobiliars für den Aussenbereich bildet dieses einen zumindest im wesentlichen geschlossenen, dreidimensionalen Körper, wobei eine äussere Oberfläche des Körpers zumindest überwiegend photovoltaisch aktiv, d.h. dazu ausgelegt sind, Strom aus solarer Strahlung gewinnen, insbesondere von Solarmodulen bedeckt, oder vorzugsweise aus Solarmodulen gebildet ist, so dass vorzugsweise mindestens 50%, höchst vorzugsweise mindestens 80% der äussere Oberfläche des Körpers photovoltaisch aktiv sind. Die äussere Oberfläche stellt vorzugsweise einen Polyeder, Kegel, Zylinder oder einen Körper aus mehreren zusammengesetzten Polyedern dar. Vorzugsweise ist der Körper derart geformt, dass die äussere Oberfläche einen Hexaeder darstellt, von welchem im Minimum 3 Flächen,vorzugsweise 4 oder 5, höchst vorzugsweise alle Flächen photovoltaisch aktiv sind. Wird z.B. ein Turm mit einer Grundfläche von 2x2 Metern und einer Höhe von 10m installiert betragt die Fläche 84m2 anstatt nur 4m2 die auf einer entsprechenden Bodenfläche genutzt werden können. Der Ertrag auf der Bodenfläche beträgt bei heutigen Wirkungsgraden ca. 800 kWh/Jahr; bei obengenanntem Turm mit der gleichen Grundfläche beträgt der Ertrag ca. 9000 kWh/Jahr. Bis jetzt wurden solche Körper nicht eingesetzt da der Ertrag pro Fläche bedeutend tiefer ist als bei optimaler Ausrichtung. Da Solarmodule inzwischen sehr günstig sind und bei diesen Körpern auch statische Kräfte übernehmen können wird diese Anwendung je länger je mehr Sinn machen und zum Einsatz kommen. Vorzugsweise können in diesem Zusammenhang auch flexible Solarmodule verwendet werden, insbesondere um Körper mit gekrümmten photovoltaisch aktiven Flächen zu bilden.

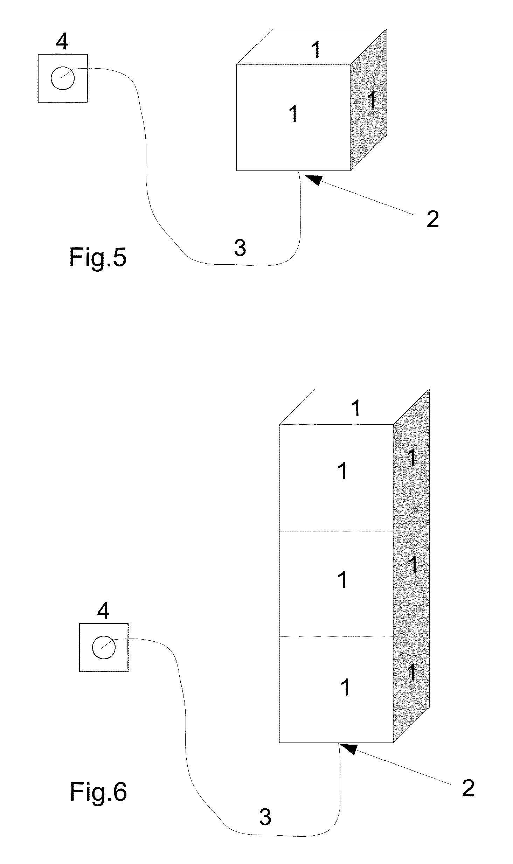

Fig. 5 zeigt eine detaillierte Schemaansicht eines Solar-Würfels als Beispiel einer vierten bevorzugten Ausführung der Erfindung.

Der Photovoltaik-Würfel besteht aus 6 quadratischen Solarmodulen 1, dem Netzwechselrichter 2 und dem Kabel 3 das den Würfel mit dem Wechselstromnetz via Steckdose 4 verbindet.

Fig. 6 zeigt eine detaillierte Schemaansicht eines Solar-Turms als Beispiel einer fünften bevorzugten Ausführung der Erfindung.

Der Photovoltaik-Turm besteht aus 5 Flächen wobei nur die Flächen nach Süden, Osten und Westen sowie das Dach mit Solarmodulen 1 belegt sind. Die Fläche nach Norden ist mit nicht photovoltaisch aktiven Platten belegt. Mit dem Netzwechselrichter 2 und dem Kabel 3 wird der Turm mit dem Wechselstromnetz verbunden.

Auch wenn die Erfindung vorstehend mit Bezug auf spezifische Ausführungsformen beschrieben und veranschaulicht ist, ist diese nicht auf diese Ausführungsformen beschränkt. Vielmehr können innerhalb des Schutz- und Äquivalenzbereichs der Patentansprüche verschiedene Modifikationen von Einzelheiten vorgenommen werden, ohne dass daraus eine Abweichung von der Erfindung resultiert.

Die Erfindung gemäss den vorstehenden Ausführungsformen kann insbesondere in Form der und/oder in Kombination mit den nachstehenden Varianten realisiert werden:
1.Gartenmöbel und anderes Mobiliar im Aussenbereich dadurch gekennzeichnet dass es solare Strahlung in Strom umwandelt und die erzeugte elektrische Energie in das Wechselstrom Netz einspeist und ohne Batterien auskommt.
2.Mobiliar im Aussenbereich gemäss Variante 1 dadurch gekennzeichnet dass diese Gartenmöbel, Tische, Stühle, Truhen, Boxen, Liegestühle, Liegen, Wippen, Sitzgruppen, Polstergruppen, Betten, Bänke, Schränke, Sofas, Dekorartikel, Sitzbänke, Abtrennwände etc. sein können.
3.Photovoltaik Gartenmöbel gemäss Variante 1/2 dadurch gekennzeichnet dass die Möbel mit allen Arten von Solarmodulen aus Glas, aus Kunststoff, mit kristallinen oder Dünnschicht Zellen, flexibel, durchsichtig, farbig, bifacial aktiv etc. ausgestattet sein können.
4.Mobiliar im Aussenbereich gemäss Variante 1 bis 3 dadurch gekennzeichnet dass dieses Mobiliar in Privat Gärten, im öffentlichen Raum, am Strand, in Sportstadien, Freizeitpärken, Badeanstalten, Gartenrestaurants, Sonnenterrassen, Outdoor Kinos etc. genutzt werden können.
5.Mobiliar im Aussenbereich gemäss Variante 1 bis 4 dadurch gekennzeichnet dass dieses Mobiliar mit Solarmodulen versehen ist und zusätzlich zur normalen Nutzung so beschaffen ist, dass der Teil mit dem Solarmodul in Neigung und Azimut so verstellt werden kann dass zu jeder Tageszeit und/oder Jahreszeit ein optimaler Ertrag erzeugt werden kann. Neigung und Azimut kann auch motorisch nachgeführt sein.
6.Mobiliar im Aussenbereich gemäss Variante 1 bis 5 dadurch gekennzeichnet dass dieses Mobiliar aus allen möglichen Werkstoffen wie Holz, Kunststoff, Eisen, Aluminium, rostfreiem Stahl, Glas, Stein, Beton etc. bestehen kann.
7.Mobiliar im Aussenbereich gemäss Variante 1 bis 6 dadurch gekennzeichnet dass dieses Mobiliar eine kratzfeste Oberfläche hat. Dies kann z.B. durch Saphirglas oder anderen Produkten, Technologien und Verfahren erreicht werden.
8.Mobiliar im Aussenbereich gemäss Variante 1 bis 7 dadurch gekennzeichnet dass zwischen den Stromerzeugern (Photovoltaik) und dem Wechselstromnetz ein elektronischer Apparat montiert ist der den Gleichstrom in Wechselstrom umwandelt. Diese Umwandlung ist so gestaltet dass die Beschattung eines oder mehrerer Module die Energieerzeugung der anderen Module nicht verringert.
9.Photovoltaik Gartenmöbel gemäss Variante 1 bis 8 dadurch gekennzeichnet dass diese Materialien so konstruiert sind dass bei einer Überbelastung, d.h. z.B. beim Bruch keine Verletzungsgefahr besteht. Dies wird z.B. durch ein Einscheibensicherheitsglas (ESG) erreicht.
10.Photovoltaik Gartenmöbel gemäss Variante 1 bis 9 dadurch gekennzeichnet dass die Gartenmöbel mit flexiblen Kabeln und entsprechend wasserdichten Steckern elektrisch verdrahtet und mit dem Netz verbunden werden.

## Patentansprüche

1. Mobiliar im Aussenbereich, insbesondere Gartenmöbel (10, 20), **dadurch gekennzeichnet dass** es solare Strahlung in Strom umwandelt und eine erzeugte elektrische Energie in ein Wechselstromnetz einspeist.

2. Mobiliar im Aussenbereich gemäss Anspruch 1, **dadurch gekennzeichnet, dass** es ohne Speichermittel zur Langzeitspeicherung elektrischer Energie auskommt, insbesondere keine Speichermittel zur Langzeitspeicherung elektrischer Energie aufweist.

3. Mobiliar im Aussenbereich gemäss einem der vorangehenden Ansprüche, **dadurch gekennzeichnet, dass** es ohne Batterien auskommt.

4. Mobiliar im Aussenbereich gemäss einem der vorangehenden Ansprüche, **dadurch gekennzeichnet dass** es
(a) ein Mittel zur Umwandlung von solarer Strahlung in Strom, insbesondere ein photovoltaisches Element, vorzugsweise ein Solarmodul (1);
(b) ein Mittel (2) zur Einspeisung elektrischer Energie in das Wechselstromnetz, insbesondere in ein elektrisches Versorgungsnetz umfasst.

5. Mobiliar im Aussenbereich gemäss einem der vorangehenden Ansprüche, **dadurch gekennzeichnet, dass** es sich um Gartenmöbel, insbesondere Tische, Stühle, Truhen, Boxen, Liegestühle, Liegen, Wippen, Sitzgruppen, Polstergruppen, Betten, Bänke, Schränke, Sofas, Dekorartikel, Sitzbänke, oder Abtrennwände handelt.

6. Mobiliar im Aussenbereich gemäss einem der vorangehenden Ansprüche, **dadurch gekennzeichnet, dass** die Möbel mit allen Arten von Solarmodulen aus Glas, aus Kunststoff, mit kristallinen oder Dünnschicht Zellen, flexibel, durchsichtig, farbig, bifacial aktiv etc. ausgestattet sein können.

7. Mobiliar im Aussenbereich gemäss einem der vorangehenden Ansprüche, **dadurch gekennzeichnet, dass** dieses Mobiliar aus allen möglichen Werkstoffen wie Holz, Kunststoff, Eisen, Aluminium, rostfreiem Stahl, Glas, Stein, Beton etc. bestehen kann.

8. Mobiliar im Aussenbereich gemäss einem der vorangehenden Ansprüche, **dadurch gekennzeichnet, dass** dieses Mobiliar eine kratzfeste Oberfläche hat, welche insbesondere aus Saphirglas, Aluminosilikatglas oder mittels anderer Produkte, Technologien und Verfahren gefertigt ist.

9. Mobiliar im Aussenbereich gemäss einem der vorangehenden Ansprüche, **dadurch gekennzeichnet dass** zwischen den Stromerzeugern, insbesondere dem photovoltaischen Element, und dem Wechselstromnetz ein elektronischer Apparat montiert ist, der den Gleichstrom in Wechselstrom umwandelt, wobei diese Umwandlung so gestaltet ist, dass die Beschattung eines oder mehrerer Module die Energieerzeugung der anderen Module nicht verringert.

10. Mobiliar im Aussenbereich gemäss einem der vorangehenden Ansprüche, **dadurch gekennzeichnet, dass** diese Materialien so konstruiert sind dass bei einer Überbelastung, insbesondere bei einem Bruch, keine Verletzungsgefahr besteht, insbesondere durch eine Verwendung von Einscheibensicherheitsglas.

11. Mobiliar im Aussenbereich gemäss einem der vorangehenden Ansprüche, **dadurch gekennzeichnet, dass** die Gartenmöbel mit flexiblen Kabeln und entsprechend wasserdichten Steckern elektrisch verdrahtet und mit dem Netz verbunden werden.

12. Mobiliar im Aussenbereich gemäss einem der vorangehenden Ansprüche, **dadurch gekennzeichnet, dass** das Mobiliar aus dreidimensionalen Körpern aus Polyedern, Kegeln, Zylindern oder zusammengesetzten Polyedern besteht, wobei mindestens 50% der Oberfläche photovoltaisch aktiv ist und die eingesetzten Solarmodule auch statische Kräfte übernehmen können.

13. Elektrisches Energieerzeugungs- und -übertragungssystem, umfassend
(a) ein Versorgungsnetz, insbesondere ein Niederspannungsnetz, mit einer Vielzahl von Versorgungsanschlüssen, insbesondere Steckdosen (4), zur Versorgung von Geräten mit elektrischer Energie;
(b) ein Verteilungsnetz, insbesondere ein Mittelspannungs-Wechselstromnetz, mit welchem das Versorgungsnetz zum Austausch elektrischer Energie gekoppelt ist;
(c) ein photovoltaisches Element, insbesondere ein Solarmodul (1), zur Erzeugung elektrischer Energie; **dadurch gekennzeichnet dass**
(d) das photovoltaische Element in ein Mobiliar für den Aussenbereich integriert ist;
(e) das Mobiliar für den Aussenbereich einen Wechselrichter (2) umfasst;
(f) das photovoltaische Element zur Einspeisung elektrischer Energie in das Verteilungsnetz mit dem Versorgungsnetz verbunden ist, insbesondere über einen ersten Versorgungsanschluss.

14. Elektrisches Energieerzeugungs- und -übertragungssystem gemäss dem vorangehenden Anspruch, dass der Wechselrichter für die Einspeisung elektrischer Energie in das Versorgungsnetz ausgelegt ist, insbesondere dazu ausgelegt ist, auf das Versorgungsnetz aufzusynchronisieren.

15. Elektrisches Energieerzeugungs- und -übertragungssystem gemäss Anspruch 13 oder 14, umfassend ein Mobiliar für den Aussenbereich gemäss einem der Ansprüche 1 bis 12.
